# EUROPEAN PATENT SPECIFICATION

(11) **EP 3 258 776 B1**
(45) Date of publication and mention of the grant of the patent: **18.11.2020**
(21) Application number: 16704054.2
(22) Date of filing: 05.02.2016
(51) Int. Cl.: A01K 13/00, B26B 21/12

(54) **GROOMING TOOL FOR PETS**
PFLEGEVORRICHTUNG FÜR HAUSTIERE
OUTIL DE TOILETTAGE POUR ANIMAUX DE COMPAGNIE

(30) Priority: 20.02.2015 AU 2015900595
(43) Date of publication of application: 27.12.2017
(73) Proprietor: Société des Produits Nestlé S.A., 1800 Vevey (CH)
(72) Inventor: HARRIS, Mark, Concord, New South Wales 2137 (AU)
(74) Representative: Elkington and Fife LLP
(86) International application number: PCT/IB2016/050617
(87) International publication number: WO 2016/132245

(56) References cited:
- WO-A1-2016/023699
- DE-A1- 3 844 276
- FR-A1- 2 999 871
- US-A- 5 461 780
- US-A1- 2007 084 416
- US-A1- 2014 261 227
- US-B1- 6 782 846

## Description

### Field of the Invention

The present invention relates to grooming tools and in particular to pet grooming tools.

The invention has been developed primarily for providing a grooming tool for use in grooming a furred pet and will be described hereinafter with reference to this application. However, it will be appreciated that the invention is not limited to this particular field of use.

### Background of the Invention

Many furred pets, such as dogs and cats, tend to moult or shed hair, which can be problematic for pet owners to clean off various household surfaces. As such, pet owners generally want to remove the loose hair from their pets in a controlled manner, commonly utilising commercially available grooming tools such as brushes or combs. However, in grooming a furred animal, there typically exists a balance between the removal of loose hair (i.e. hair that has become loose or has completely detached from the animal) and leaving the intact hair in the animals coat. For example, with traditional brushes and combs, the non-loose hair is left intact on the animal's coat, but these tools have a limited ability to remove the loose undercoat hair from the fur. As such, the use of such tools in grooming pets is excessively time consuming and ineffective as these tools do not collect loose undercoat hair.

In an attempt to selectively remove the loose hair from furred pets, some pet groomers have found that the blade from an electric clipper can be removed from the machine and utilised as a handheld grooming tool. The clipper blade, used similarly to a comb, includes a plurality of teeth and a sharpened edge, which assists in the collection of loose undercoat hair. However, the clipper blade is not designed for free use and can be difficult to grip, resulting in user fatigue in the hands and wrists.

In an effort to overcome this handling problem, some attempts have included mounting the clipper blade onto a handle, as detailed in at least US 6,782,846.

While the use of the electric clipper blade was found to remove some of the loose undercoat hair, the sharpened edge, which forms a V-shape in-between each pair of adjacent teeth, was found to pull or cut some of the intact, healthy hairs from the topcoat in use. This is caused by a reverse-scissor action between the V-shaped edge and the pet hair as the edge is drawn over the pet fur. This is problematic as the pulling or cutting of the hair causes the pet physical discomfort or pain, and the removal of the topcoat could expose the pet's undercoat or skin to external factors such as rain and/or UV radiation. This could have negative health implications in, for example, impacting upon the thermoregulation of the pet and/or burning of the pet's skin. Furthermore, the cutting of the fur is also detrimental to the aesthetics of the pet, which can be extremely important for pets that compete in shows which judge the pet's physical appearance, e.g. conformation dog shows. Consequentially, for at least the reasons above, many professional pet groomers are wary of these grooming products and have opted not to use them.

US 5,461,780 A relates to a simple, purely mechanical, hand-held yet handleless, do-it-yourself hair trimming device employing conventional razor blades and operable by a typical combing motion.

US 2014/0261227 A1 relates to livestock grooming articles and methods regarding the use of such livestock grooming articles.

US 2007/0084416 A1 relates to a pet grooming comb whose holding angle can be adjusted conveniently.

### Object of the Invention

It is an object of the present invention to overcome or ameliorate at least one of the disadvantages of the prior art, or to provide a useful alternative.

It is an object of the invention in its preferred form to provide a pet grooming product that can at least partially collect loose undercoat hair while causing minimal harm to the live topcoat hair.

### Summary of the Invention

According to a first aspect of the invention, there is provided a head for a pet grooming tool including:
a base portion;
a plurality of teeth extending therefrom with at least two different respective tip lengths; and
a blade edge extending between at least some of said plurality of teeth;
wherein said blade edge forms a U-shape between said at least some of said plurality of teeth; and
wherein said blade edge is substantially dulled.

Preferably, the blade edge is adapted to differentiate between intact healthy hair and loose hair of a pet, and selectively collect the loose hair when said head is drawn over pet fur.

The blade edge is preferably adapted to reduce the shear stress on individual hairs when said head is drawn over pet fur.

The plurality of teeth preferably has ends that are:
(i) all substantially rounded; or
(ii) all substantially tapered; or
(iii) all substantially angular; or
(iv) any combination of substantially rounded, substantially tapered, and substantially angular.

The plurality of teeth preferably have tip lengths vary in accordance with a predetermined pattern. More preferably, the predetermined pattern is an alternation between a high tip length and a low tip length.

Preferably the blade edge forms a U-shape between each adjacent tooth.

According to a second aspect of the invention, there is provided a pet grooming tool including:
a head according to the first aspect; and
a handle, attached to said head, for gripping by a user

In one embodiment, the handle is preferably attached to said head such that said plurality of teeth and/or said blade edge is mounted with a leading angle of less than 90 degrees. More preferably, the angle is about 45 degrees.

In another embodiment, the handle is preferably attached to said head such that said plurality of teeth and/or said blade edge is mounted with a trailing angle of more than 90 degrees.

Preferably the handle is adapted to be grippable in a plurality of manners.

### Brief Description of the Drawings

Preferred embodiments of the invention will now be described, by way of example only, with reference to the accompanying schematic drawings in which:
Figure 1 is a close-up front view of a head for a pet grooming tool according to the invention;
Figure 2 is a front perspective view of a pet grooming tool including the head of Figure 1;
Figure 3 is a side view of the pet grooming tool.

### Preferred Embodiments of the Invention

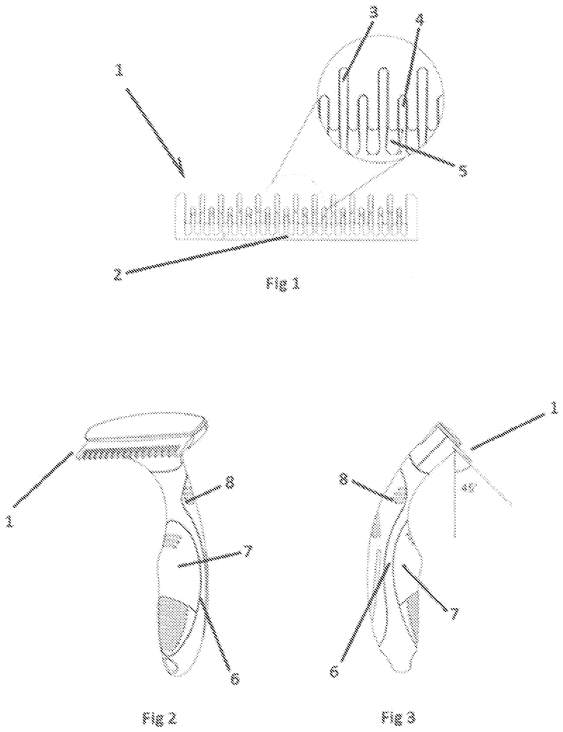

Referring initially to Figure 1, the head 1 for a pet grooming tool includes a base 2 and a plurality of teeth extending therefrom, shown in the form of alternating teeth lengths with a high tip length 3 and a low tip length 4. The tips of the teeth have been shown to have slightly rounded ends; however in some embodiments the tips may be tapered and/or have a substantially angular end. In alternative embodiments, the tip lengths may be arranged in any combination such that there are at least two different tip lengths. This can include, but is not limited to, a set of two or more of tips with a first length followed by two or more tips with a second length, or wherein there are an uneven amount of tips with a first tip length and tips with a second tip length.

The head 1 also includes a blade edge 5 extending between at least some of the teeth, wherein the blade edge forms a U-shape. In this embodiment, the blade edge 5 has been shown to form a U-shape between each adjacent pair of teeth; however in other embodiments the blade edge may be provided as a U-shape between only some of the teeth. The blade edge is substantially dulled to minimise the risk of cutting any live hair while allowing the discrimination of loose undercoat hair to live topcoat hair.

The blade edge forming a U-shape has been purposely developed by the inventors to be able to differentiate between the intact healthy hair and the loose hair of a pet, and selectively collect the loose hair with minimal pulling, cutting or crimping of the intact healthy hair. While this edge functions similarly to the V-shaped edge of the prior art, the V-shaped edge does not differentiate the healthy and loose hair, and applies a shear force to each hair that is caught within the forge. This shear force causes the healthy hair to be pulled or cut through a reverse-scissor action as the edge is drawn along the fur of the pet. Conversely, the U-shaped edge has been specifically designed to significantly reduce shear stress inflicted from the reverse-scissor action as the edge is drawn along the fur of a pet, and instead the hairs are allowed to bend and pass underneath the forge such that they are not pulled nor cut. This is particularly advantageous as use of the U-shaped edge allows the removal of the loose undercoat while maintaining the healthy topcoat and thus minimising or overcoming the aesthetic and health issues that arise with the use of grooming tools with a V-shaped edge.

Referring to Figures 2 and 3, the head 1 is designed to be attached to a handle 6, shown with an anterior ergonomic grip 7 and a posterior ergonomic grip 8, to form the pet grooming tool. The handle has been shown to be substantially curved to assist ergonomic use; however alternative handles may also be used.

It was surprisingly found that the head 1 and the blade edge 5 had an increased effectiveness in collecting loose undercoat hair when mounted at a leading angle of about 45 degrees relative to the handle 6, as shown in Figures 2 and 3. While this angle appears to be optimal for grooming furred pets, alternative mounting angles have been considered, particularly about 30, 60 and 90 degrees relative to the handle. Furthermore, trailing angles of about 120, 135 and 150 degrees relative to the handle have also been considered in attempts to further reduce the shear stress inflicted upon the hair by the blade edge.

To use the pet grooming tool, the handle 6 is gripped by a user's hand and presented perpendicular to the pet fur. Due to the design of the anterior grip 7 and the posterior grip 8, the handle may be gripped in a plurality of manners in accordance with the comfort of the user. With the embodiment shown in Figures 2 and 3, this results in the head 1 and the blade edge 5 being presented to the pet fur at an angle of 45 degrees. The user then draws the head along the pet fur in a downward motion toward the distal end of the handle, resulting in the high tip teeth 3, the low tip teeth 4 and the blade edge 5 removing any loose hair on the pet fur, including the loose undercoat hairs, while causing minimal harm to any live hairs. This action can be repeated to increase the amount of loose hair collected, until the pet is substantially free of loose hair.

It will be appreciated that the illustrated embodiment provides a pet grooming product that can at least partially collect loose undercoat hair while causing minimal harm to the live topcoat hair. Although the invention has been described with reference to a specific example, it will be appreciated by those skilled in the art that the invention may be embodied in many other forms.

## Claims

1. A head (1) for a pet grooming tool including:
a base portion (2);
a plurality of teeth (3, 4) extending therefrom with at least two different respective tip lengths; and
a blade edge (5) extending between at least some of said plurality of teeth;
wherein said blade edge (5) forms a U-shape between said at least some of said plurality of teeth; and
wherein said blade edge (5) is substantially dulled.

2. The head (1) according to claim 1 wherein said plurality of teeth (3, 4) have ends that are:
(i) all substantially rounded; or
(ii) all substantially tapered; or
(iii) all substantially angular; or
(iv) any combination of substantially rounded, substantially tapered, and substantially angular.

3. The head (1) according to any one of the preceding claims wherein said plurality of teeth (3, 4) have tip lengths vary in accordance with a predetermined pattern.

4. The head (1) according to claim 3 wherein said predetermined pattern is an alternation between a high tip length and a low tip length.

5. The head (1) according to any one of the preceding claims wherein said blade edge (5) forms a U-shape between each adjacent tooth.

6. A pet grooming tool including:
a head (1) according to any one of claims 1 to 5; and
a handle (6), attached to said head, for gripping by a user.

7. The pet grooming tool according to claim 6 wherein said handle (6) is attached to said head (1) such that said plurality of teeth (3, 4) and/or said blade edge (5) is mounted with a leading angle of less than 90 degrees.

8. The pet grooming tool according to claim 7 wherein said angle is about 45 degrees.

9. The pet grooming tool according to claim 6 wherein said handle (6) is attached to said head (1) such that said plurality of teeth (3, 4) and/or said blade edge (5) is mounted with a trailing angle of more than 90 degrees.

10. The pet grooming tool according to any one of claims 6 to 9 wherein said handle (6) is adapted to be grippable in a plurality of manners.

## Patentansprüche

1. Kopf (1) für eine Pflegevorrichtung für Haustiere, einschließend:
einen Basisabschnitt (2);
eine Vielzahl von Zähnen (3, 4), welche sich mit mindestens zwei unterschiedlichen jeweiligen Spitzenlängen von dort aus erstrecken; und
eine Klingenkante (5), welche sich zwischen zumindest einigen der Vielzahl von Zähnen erstreckt;
wobei die Klingenkante (5) eine U-Form zwischen den zumindest einigen der Vielzahl von Zähnen bildet; und
wobei die Klingenkante (5) im Wesentlichen stumpf ist.

2. Kopf (1) nach Anspruch 1, wobei die Vielzahl von Zähnen (3, 4) Enden aufweist, die Folgendes sind:
(i) alle im Wesentlichen abgerundet; oder
(ii) alle im Wesentlichen zugespitzt; oder
(iii) alle im Wesentlichen eckig; oder
(iv) eine beliebige Kombination aus im Wesentlichen abgerundet, im Wesentlichen zugespitzt und im Wesentlichen eckig.

3. Kopf (1) nach einem der vorhergehenden Ansprüche, wobei die Vielzahl von Zähnen (3, 4) Spitzenlängen aufweist, die gemäß einem vorgegebenen Muster variieren.

4. Kopf (1) nach Anspruch 3, wobei das vorbestimmte Muster ein Wechsel zwischen einer hohen Spitzenlänge und einer geringen Spitzenlänge ist.

5. Kopf (1) nach einem der vorhergehenden Ansprüche, wobei die Klingenkante (5) eine U-Form zwischen jeweiligen benachbarten Zähnen bildet.

6. Pflegevorrichtung für Haustiere, einschließend:
einen Kopf (1) nach einem der Ansprüche 1 bis 5; und
einen Griff (6), der an dem Kopf angebracht ist, zum Greifen durch einen Benutzer.

7. Pflegevorrichtung für Haustiere nach Anspruch 6, wobei der Griff (6) derart an dem Kopf (1) angebracht ist, dass die Vielzahl von Zähnen (3, 4) und/oder die Klingenkante (5) mit einem Vorderwinkel von weniger als 90 Grad montiert ist.

8. Pflegevorrichtung für Haustiere nach Anspruch 7, wobei der Winkel ungefähr 45 Grad beträgt.

9. Pflegevorrichtung für Haustiere nach Anspruch 6, wobei der Griff (6) derart an dem Kopf (1) angebracht ist, dass die Vielzahl von Zähnen (3, 4) und/oder die Klingenkante (5) mit einem Hinterwinkel von mehr als 90 Grad angebracht sind.

10. Pflegevorrichtung für Haustiere nach einem der Ansprüche 6 bis 9, wobei der Griff (6) dafür geeignet ist, auf eine Vielzahl von Arten greifbar zu sein.

## Revendications

1. Tête (1) pour un outil de toilettage pour animaux de compagnie incluant :
une partie de base (2) ;
une pluralité de dents (3, 4) s'étendant à partir de celle-ci avec au moins deux longueurs de pointe respectives différentes ; et
un bord de lame (5) s'étendant entre au moins certaines parmi ladite pluralité de dents ;
dans laquelle ledit bord de lame (5) forme une forme de U entre au moins les certaines précitées parmi ladite pluralité de dents ; et
dans laquelle ledit bord de lame (5) est essentiellement émoussé.

2. Tête (1) selon la revendication 1 dans laquelle ladite pluralité de dents (3, 4) ont des extrémités qui sont :
(i) toutes essentiellement arrondies ; ou
(ii) toutes essentiellement effilées ; ou
(iii) toutes essentiellement angulaires ; ou
(iv) n'importe quelle combinaison parmi essentiellement arrondies, essentiellement effilées, et essentiellement angulaires.

3. Tête (1) selon l'une quelconque des revendications précédentes dans laquelle ladite pluralité de dents (3, 4) ont des longueurs de pointe qui varient conformément à un motif prédéterminé.

4. Tête (1) selon la revendication 3 dans laquelle ledit motif prédéterminé est une alternance entre une longueur de pointe élevée et une longueur de pointe faible.

5. Tête (1) selon l'une quelconque des revendications précédentes dans laquelle ledit bord de lame (5) crée une forme de U entre chaque dent adjacente.

6. Outil de toilettage pour animaux de compagnie incluant :
une tête (1) selon l'une quelconque des revendications 1 à 5 ; et
un manche (6), fixé à ladite tête, pour préhension par un utilisateur.

7. Outil de toilettage pour animaux de compagnie selon la revendication 6 dans lequel ledit manche (6) est fixé à ladite tête (1) de telle sorte que ladite pluralité de dents (3, 4) et/ou ledit bord de lame (5) sont montés avec un angle d'attaque inférieur à 90 degrés.

8. Outil de toilettage pour animaux de compagnie selon la revendication 7 dans lequel ledit angle est d'environ 45 degrés.

9. Outil de toilettage pour animaux de compagnie selon la revendication 6 dans lequel ledit manche (6) est fixé à ladite tête (1) de telle sorte que ladite pluralité de dents (3, 4) et/ou ledit bord de lame (5) sont montés avec un angle de fuite de plus de 90 degrés.

10. Outil de toilettage pour animaux de compagnie selon l'une quelconque des revendications 6 à 9, dans lequel ledit manche (6) est conçu pour pouvoir être saisi d'une pluralité de manières.
